# EUROPEAN PATENT SPECIFICATION

(11) **EP 1 897 751 B1**
(45) Date of publication and mention of the grant of the patent: **15.08.2012**
(21) Application number: 07017490.9
(22) Date of filing: 06.09.2007
(51) Int. Cl.: B60R 1/00, B60R 21/34, G06T 7/20, G08G 1/16, H04N 7/18, G06K 9/00

(54) **Driving assist system for a vehicle**
Fahrunterstützungssystem für ein Kraftfahrzeug
Système de conduite assistée pour véhicule

(30) Priority: 11.09.2006 JP 2006245571; 11.09.2006 JP 2006245572
(43) Date of publication of application: 12.03.2008
(73) Proprietor: KAWASAKI JUKOGYO KABUSHIKI KAISHA, Kobe shi, Hyogo 650-8670 (JP)
(72) Inventor: Shimada, Tadao c/o Kawasaki Jukogyo Kabushiki Kaisha, Akashi-shi Hyogo 673-8666 (JP)
(74) Representative: Leinweber & Zimmermann

(56) References cited:
- EP-A- 1 202 214
- WO-A-2004/029659
- US-A- 4 739 401
- US-A1- 2005 063 565
- US-B1- 6 327 522

## Description

### TECHNICAL FILED

The present invention relates to a driving assist system configured to assist driving of a vehicle, and more particularly to a driving assist system capable of detecting a person who is present forward of a vehicle.

### BACKGROUND ART

In recent years, with development of an information processing technology, a driving assist system which obtains information relating to driving of vehicles such as a two-wheeled vehicle, a four-wheeled vehicle, and other vehicles and assists driving of the vehicle by using that information, has been researched. As one example of such a driving assist system, attention has been focused on a system which detects a person, namely, pedestrian, who is present forward of a vehicle during driving of the vehicle and informs a driver of a detection result. Since it is often difficult for the driver to visually catch the person during driving at night, a demand for such a driving assist system is high.

One example of the above described driving assist system configured to detect the person has been proposed in Japanese Laid-Open Patent Application Publication No. 2004-303219, in which a region corresponding to a head part of the person and a region corresponding to a space above a shoulder of the person are set in an infrared image taken by two infrared cameras and the person is recognized based on the set regions.

In accordance with this driving assist system, since the region from the head part to the shoulder of the person captured in the infrared image can be recognized, reliable detection of the person becomes possible as compared to detection based on only a ratio of a longitudinal length to a lateral length of the region.

The above conventional driving assist system is equipped with two cameras because of the use of stereo vision. Therefore, such a driving assist system is difficult to mount in the two-wheeled vehicle which has a small width, although it can be easily mounted in the four-wheeled vehicle.

In some cases, a stable image cannot be obtained due to occurrence of vibration in the vehicle during driving. Furthermore, in the conventional driving assist system, the driver is likely to recognize an object which is not a human being as a person by mistake or vice versa. The driving assist system incorporated into the two-wheeled vehicle is less likely to obtain a stable image, because the two-wheeled vehicle tends to vibrate more highly than the four-wheeled vehicle.

Document WO2004/029659 A discloses an apparatus, according to the preamble of claim 1, for identifying one or more humans in a sequence of infrared images with an imaging device and a candidate detection module with a road detection module. The candidate detection module is used to identify person candidates from hotspots or areas in the captured image with high intensity.

Document US 6,327,522 B describes a display apparatus for a vehicle with an imaging device using infrared rays to detect an obstacle present ahead of the vehicle on the basis of the image and with distance detection means to detect the distance between the obstacle and the vehicle.

### SUMMARY OF THE INVENTION

The present invention has been developed under the circumstances, and an object of the present invention is to provide a driving assist system capable of stably detecting a person who is present forward of a vehicle equipped with the system.

According to the present invention, there is provided a driving assist system for a vehicle comprising an imaging device configured to take an image of a region forward of the vehicle such that brightness in the image is higher in a subject region with a higher temperature, the image including a road; a road region detector configured to detect a road region corresponding to the road from the image taken by the imaging device; a person candidate detector configured to detect a person candidate based on a result of comparison between a higher-brightness in the image and a shape pattern prestored; and a person determiner configured to determine whether or not the detected person candidate is a person, based on a positional relationship between the road region detected by the road region detector and the person candidate detected by the person candidate detector.

By determining whether or not the person candidate is the person based on the positional relationship between the person candidate and the road region, it becomes possible for the driver of the two-wheeled vehicle to more stably detect the person on whom attention has to be focused.

The person determiner may be configured to determine that the detected person candidate is the person when a lower part of the detected person candidate is in contact with the detected road region.

The road region detector may be configured to determine whether or not a specified region in the image is the road region based on a dimension of an area of the specified region and a position of the specified region.

The road region detector may be configured to determine that the specified region is the road region when the area of the specified region is larger than a value set based on an area of the whole image and the specified region is located on a lower side.

The imaging device may be a far-infrared camera; and the road region detector may be configured to determine whether or not a specified region in the image is the road region, based on brightness change in the specified region in the image.

In a case where the far-infrared camera is used as the imaging device, the fact that brightness change in the image taken by the imaging device is small means that temperature change is small. Since temperature on the road is generally substantially constant at night, the road can be detected more stably by paying attention to brightness change in this way.

The road region detector may be configured to determine that the specified region is the road region when the brightness change in the specified region is smaller than brightness change in the other regions in the image.

The imaging device may be a far-infrared camera; and the person candidate detector may be configured to compare a region whose brightness is higher than brightness of the other regions in the image to a shape pattern of a head part of the person, to determine whether or not the region whose brightness is higher is a head part region corresponding to a head part of the person candidate based on the comparison result, and to determine the region including the region whose brightness is higher as the person candidate when it is determined that the region whose brightness is higher is the head part region.

The person candidate detector may be configured to compare a region located under the head part region to a shape pattern of a part other than the head part of the person, to determine whether or not the region located under the head part region is the region corresponding to the part other than the head part of the person candidate based on the comparison result, and to determine that a region including the head part region and the region located under the head part region is the person candidate when it is determined that the region located under the head part region is the region corresponding to the part other than the head part of the person candidate.

The imaging device may be a far-infrared camera; and the person candidate detector may be configured to determine that a region whose brightness is higher than brightness of the other regions in the image is the person candidate, based on a ratio of a longitudinal length to a lateral length of the region whose brightness is higher.

The person candidate detector may be configured to compare the region whose brightness is higher to a shape pattern of a whole body of the person and to determine whether or not the region whose brightness is higher is the person candidate, based on the comparison result.

The driving assist system may further comprise an image compensator configured to compensate the image according to a vibration amount of the vehicle.

In such a configuration, the person who is present forward of the vehicle can be detected more stably when disorder occurs in the image taken by the imaging device due to vibration of the vehicle.

The imaging device may be configured to take a plurality of images at specified time intervals; and the image compensator may be configured to compare a precedent image taken by the imaging device and an image taken by the imaging device after the precedent image and to compensate the image after the precedent image based on the comparison result.

The person candidate detector may be configured to determine whether or not a region whose brightness is higher than a brightness of the other regions in the image is a whole body region corresponding to a whole body of the person candidate, based on a ratio of a longitudinal length to a lateral length of the region whose brightness is higher, and The person candidate detector may be configured to compare the region whose brightness is higher which has been determined as the whole body region to a shape pattern of the whole body of the person and to determine whether or not the region whose brightness is higher is the person candidate, based on the comparison result.

The shape pattern may have a shading pattern of the image.

The person candidate detector may be configured to compare a region whose brightness is higher than brightness of the other regions in the image to a shape pattern of a head part of the person, and to determine whether or not the region whose brightness is higher is a head part region corresponding to the head part of the person candidate based on the comparison result, and the person candidate detector may be configured to compare a region located under the region whose brightness is higher which has been determined as the head part region to a shape pattern of a part other than the head part of the person, to determine whether or not the region located under the region whose brightness is higher is the region corresponding to the part other than the head part of the person candidate based on the comparison result, and to determine a region including the region whose brightness is higher and the region located under the region whose brightness is higher is the person candidate when it is determined that the region located under the region whose brightness is higher is the region corresponding to the part other than the head part of the person candidate.

The driving assist system may further comprise: a building region detector configured to detect a building region corresponding to a building, from the image taken by the imaging device; and
a disturbance deletion unit configured to delete the building region detected by the building region detector from the image taken by the imaging device;
wherein the person candidate detector is configured to detect the person candidate from the image from which the building region has been deleted by the disturbance deletion unit.

The imaging device may be configured to take a plurality of images at specified time intervals; and the image compensator may be configured to compare a precedent image taken by the imaging device and an image which is taken by the imaging device after the precedent image and to compensate the image after the precedent image based on the comparison result.

The above and further objects and features of the invention will more fully be apparent from the following detailed description with accompanying drawings.

### BRIEF DESCRIPTION OF THE DRAWINGS

Fig. 1 is a block diagram showing a configuration of a driving assist system according to an embodiment of the present invention;

Fig. 2 is a flowchart showing a procedure of an operation of the driving assist system according to the embodiment of the present invention;

Fig. 3 is a flowchart showing a procedure of an operation of the driving assist system according to the embodiment of the present invention, which is associated with a vibration cancel process;

Figs. 4A to 4C are views showing a concept of an effective pixel region and a procedure of the vibration cancel process;

Fig. 5 is a flowchart showing a procedure of an operation of the driving assist system of the present invention, which is associated with a road detection process;

Fig. 6 is a flowchart showing a procedure of an operation of the driving assist system of the present invention, which is associated with a building detection process;

Fig. 7 is a flowchart showing a procedure of an operation of the driving assist system of the present invention, which is associated with a first person detection process;

Fig. 8 is a conceptual view showing an example of an image used in the driving assist system of the present invention;

Fig. 9 is a flowchart showing a procedure of an operation of the driving assist system of the present invention, which is associated with a second person detection process;

Fig. 10 is a view showing a concept of a person region detected by the second person detection process;

Fig. 11 is a conceptual view showing an example of the image used in the driving assist system of the present invention; and

Fig. 12 is a flowchart showing a procedure of an operation of the driving assist system of the present invention, which is associated with a detection result output process.

### DETAILED DESCRIPTION OF THE PREFERRED EMBODIMENTS

Hereinafter, an embodiment of the present invention will be described with reference to the drawings.

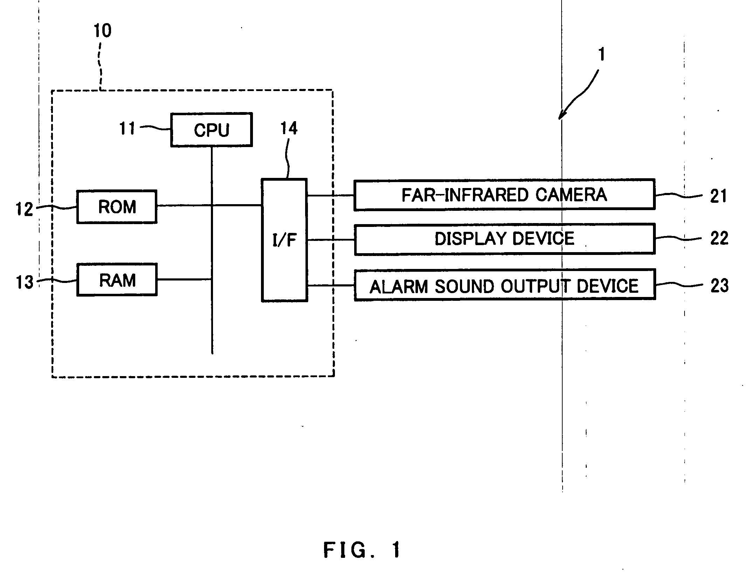

Fig. 1 is a block diagram showing a configuration of a driving assist system 1 according to an embodiment of the present invention. The driving assist system 1 is mounted in a two-wheeled vehicle such as a motorcycle. As shown in Fig. 1, the driving assist system 1 includes an ECU (electronic control unit) 10 configured to execute image processing. The ECU 10 includes as a major component, a microcomputer comprised of a CPU 11, an ROM 12, an RAM 13, an interface (I/F) 14, etc, and causes the CPU 11 to execute a computer program stored in the ROM 12, thereby operating as follows. The RAM 13 temporarily stores data and others which are generated or obtained by the operation of the ECU 10.

The ROM 12 contains specified data such as head part characteristic amount data, body characteristic amount data, whole body characteristic amount data, and person characteristic amount data.

The ECU 10 is communicatively coupled to a far-infrared camera 21, a display device 22, and an alarm sound output device 23, via the I/F 14.

The far-infrared camera 21 measures a temperature of an object surface and displays a temperature distribution of that object surface as a two-dimensional white-black image. The far-infrared camera 21 takes an image repeatedly at specified time intervals in accordance with an instruction which is output from the ECU 10 via the I/F 14, and outputs the taken image to the ECU 10 via the I/F 14.

The display device 22 is a display configured to notify a driver of the two-wheeled vehicle of information relating to detection of the person. The display device 22 may display colored images, or monochrome images.

The alarm sound output device 23 is configured to output a sound alarm raised to warn the driver when the person has been detected. The alarm sound output device 23 executes an alarm sound output process in accordance with an instruction which is output from the ECU 10 via the I/F 14.

As described above, in this embodiment, the ECU 10 executes the operation described later, but the present invention is not intended to be limited to such a configuration. For example, the driving assist system 1 of the present invention may be configured by a processor dedicated to executing image processing.

As a matter of course, the driving assist system 1 may be mounted in the four-wheeled vehicle as well as in the two-wheeled vehicle as described in this embodiment.

Next, an operation of the driving assist system 1 configured as described above will be described.

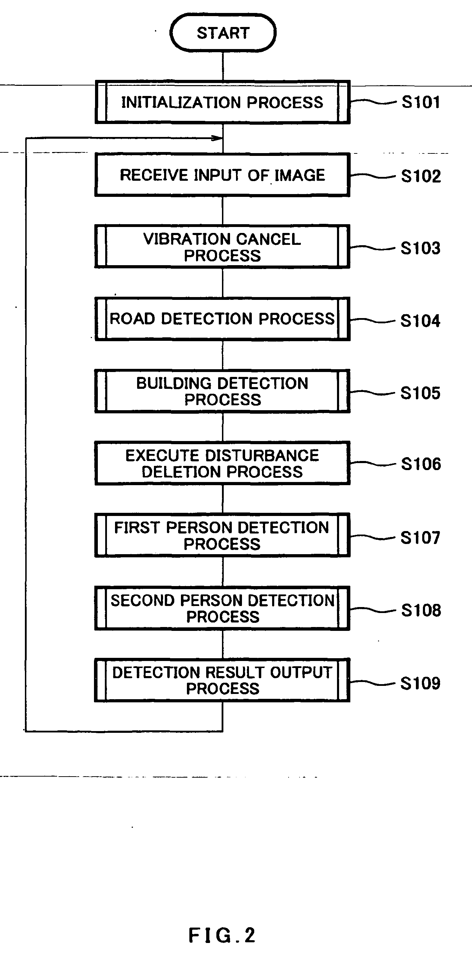

Fig. 2 is a flowchart showing a procedure of the operation of the driving assist system 1 according to the embodiment of the present invention. The operation of the driving assist system 1 is controlled by the ECU 10. The operation is executed at suitable timings during driving of the two-wheeled vehicle.

First, the driving assist system 1 executes an initialization process to, for example, obtain a specified storage area, or to set a specified variable to an initial value (S101). In this state, the system 1 starts receiving an input of an image taken by the far-infrared ray camera 21 (S 102).

Then, the driving assist system 1 executes a vibration cancel process (S103). As used herein, the term "vibration cancel process" means to compensate the image taken by the camera 21 to avoid a situation where the image is disordered due to the vibration of the vehicle during driving and thereby the person is not stably detected.

### [Vibration Cancel Process]

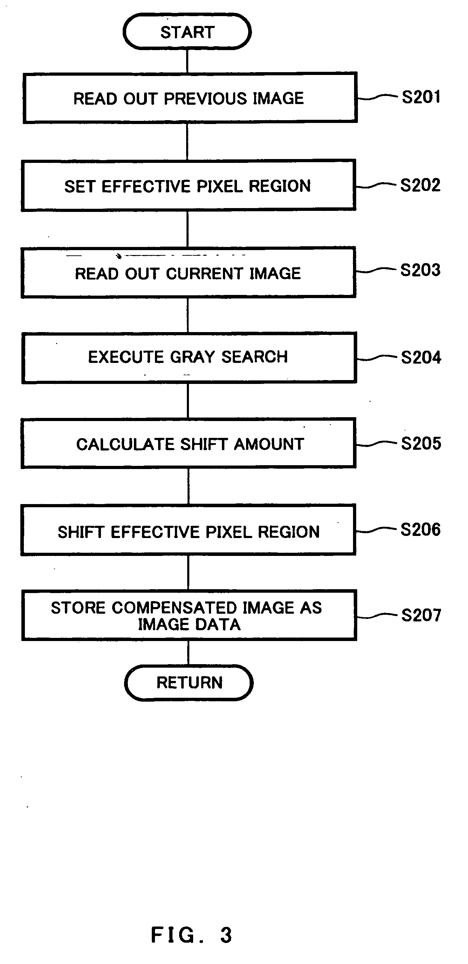

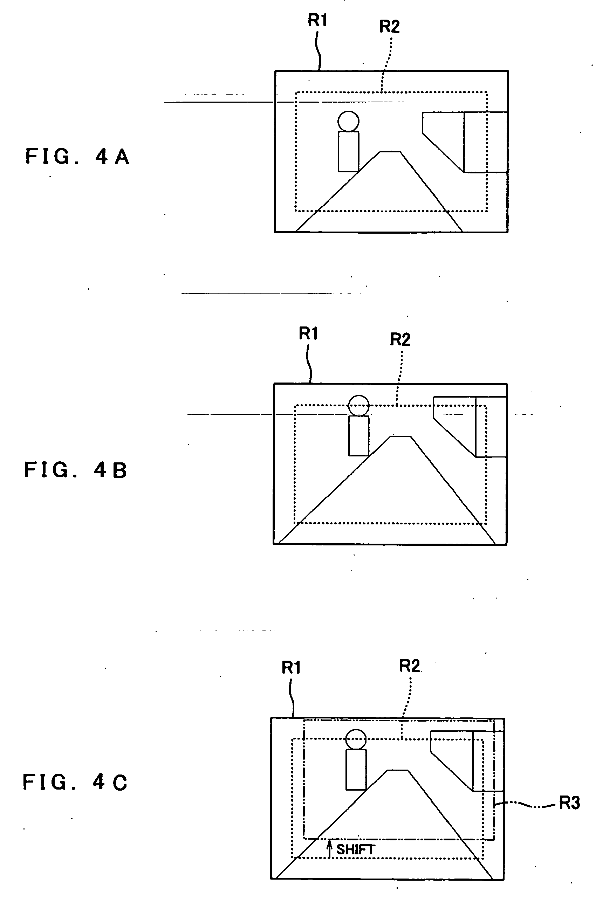

Fig. 3 is a flowchart showing a procedure of an operation of the driving assist system 1 of the present invention, which is associated with the vibration cancel process. Fig. 4 is a view showing a concept of an effective pixel region described later and the procedure of the vibration cancel process. With reference to Figs. 3 and 4, the vibration cancel process will be described.

First, the driving assist system 1 reads out the image taken previously by the far-infrared camera 21 (hereinafter referred to as a previous image) (S201), and sets an effective pixel region in the read-out previous image (S202).

As used herein, the term "effective pixel region" means a region which is provided within a pixel region (hereinafter referred to as an imaging pixel region) in which the far-infrared camera 21 takes an image, and is used to detect a person, namely, pedestrian, who is present forward of the vehicle.

Fig. 4A shows the previous image. In Fig. 4A, R2 indicates the effective pixel region set in step S202, and R1 indicates the imaging pixel region.

As shown in Fig. 4A, the effective pixel region R2 has a specified size and is provided within the imaging pixel region R1. Using the image within the effective pixel region R2, a process for detecting the person which will be described later will be executed.

After executing the step S202, the driving assist system 1 reads out an image (hereinafter referred to as a current image) taken by the far-infrared camera 21 after the previous image (S203).

Then, the driving assist system 1 executes gray search using the previous image and the current image which are precedent and thereafter, respectively in time series (S204). To be specific, the driving assist system 1 calculates a match degree between the previous image and the current image to detect points of match in the current image with respect to the previous image.

The driving assistant system 1 executes gray search in step S204 to determine a difference between the previous image and the current image and to calculate a shift amount corresponding to the difference (S205).

Then, the driving assist system 1 shifts the effective pixel region in the current image based on the shift amount calculated in step S205 (S206). The process in step S206 will be described with reference to Figs. 4B and 4C.

Fig. 4B shows the current image. As can be seen from comparison between Fig. 4A and 4B, there is a difference between the previous image and the current image which may occur due to the vibration during driving of the two-wheeled vehicle equipped with the driving assist system 1. For this reason, display ranges of objects (person, building, road and so on) in the image within the effective pixel region R2 are different between the previous image and the current image. For example, a whole body of the person is contained in the effective pixel region R2 in the previous image, but a part of a head part of the person is not contained in the effective pixel region R2 in the current image.

Fig. 4C also shows the current image. As shown in Fig. 4C, in step S206, the driving assist system 1 shifts the effective pixel region R2 by the shift amount calculated in step S205. In Fig. 4C, R3 indicates an effective pixel region after the shift. As a result, the image within the effective pixel region R3 in the current image substantially matches the image within the effective pixel region R2 in the previous image.

The driving assistant system 1 stores the above compensated current image in the effective pixel region compensated as described above, in the RAM 13 as image data (S207).

By shifting the effective pixel region in the manner as described above, the difference generated due to the vibration of the vehicle can be compensated.

The two-wheeled vehicle tends to vibrate more highly than the four-wheeled vehicle. Therefore, the above vibration cancel process is effective for the two-wheeled vehicle than for the four-wheeled vehicle.

As shown in Fig. 2, after the vibration cancel process, the driving assist system 1 executes a road detection process (S104). As used herein, the term "road detection process" means a process for detecting a road region corresponding to a road in the image data.

### [Road Detection Process]

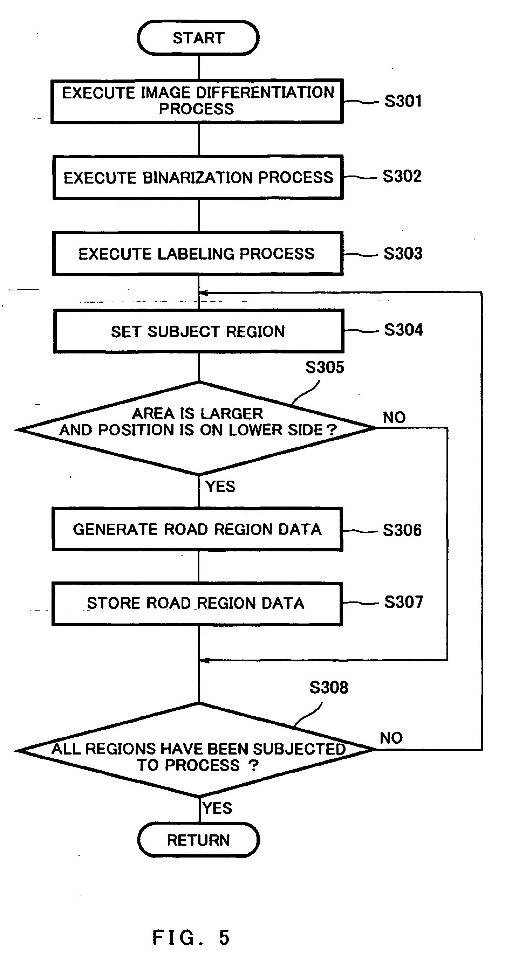

Fig. 5 is a flowchart showing a procedure of an operation of the driving assist system 1 of the present invention, which is associated with the road detection process.

The driving assist system 1 executes an image differentiation process with respect to the image data stored in the RAM 13 to calculate a change value of brightness of the image (S301). Thereby, an edge of the image is detected.

Then, the driving assist system 1 executes a binarization process with respect to the image data whose edge has been detected, thereby detecting regions whose brightness changes less (S302). The driving assist system 1 executes a labeling process for labeling coupled regions in the binarized image data (S303).

Then, the driving assist system 1 selects specified one from the labeled regions and sets the specified region as a region to be subjected to a process (hereinafter referred to as a subject region) (S304). The driving assist system 1 determines whether or not an area of the subject region is larger than a value set based on an area of the whole image and whether or not the subject region is located on a lower side (S305). As used herein, the value set based on the area of the whole image is equal to approximately 1/5 to 1/10 of a whole screen, when the far-infrared camera 21 is installed substantially horizontally so that the road lies in a lower half part of the screen, 1/2 of the whole screen at maximum, because buildings around the road lie within the lower half part of the screen. The value is set suitably depending on the mounting position of the far-infrared camera 21.

In step S305, the driving assist system 1 determines, for example, whether or not the area of the subject region is larger than the above set value and whether or not the subject region is located in a lower half part of the effective pixel region.

If it is determined that the area of the subject region is smaller than the value set based on the area of the whole regions or the subject region is not located in the lower half part of the effective pixel region (NO in S305), the driving assist system 1 advances the process to step S308.

On the other hand, if it is determined that the area of the subject region is larger than the value set based on the area of the whole regions and the subject region is located in the lower half part (YES in S305), the driving assist system 1 determines that that subject region is the region corresponding to the road (road region), and generates road region data relating to the road region using data relating to position, area and others of the subject region (S306). The driving assist system 1 stores the road region data in the RAM 13 (S307).

Then, the driving assist system 1 determines whether or not all the labeled regions have been set as the subject regions and have been subjected to the process (S308). If it is determined that there is a region which has not been set as the subject region and has not been subjected to the process (NO in step S308), the driving assist system 1 returns the process to step S304 and executes the above steps S304 through S307. On the other hand, if it is determined that all the labeled areas have been set as the subject regions and have been subjected to the process (YES in S308), the driving assist system 1 terminates the road detection process.

As should be appreciated from the foregoing, detection of the road region is performed based on a degree of brightness change in the image. The fact that brightness change in the image taken by the far-infrared camera 21 is small means that temperature change is small. Since temperature on the road is generally substantially constant during the night, the road can be detected stably by paying attention to the brightness change in this way.

As shown in Fig. 2, after the road detection process, the driving assist system 1 executes the building detection process (S105). As used herein, the term "building detection process" means a process for detecting a building region corresponding to a building in the image data.

### [Building Detection Process]

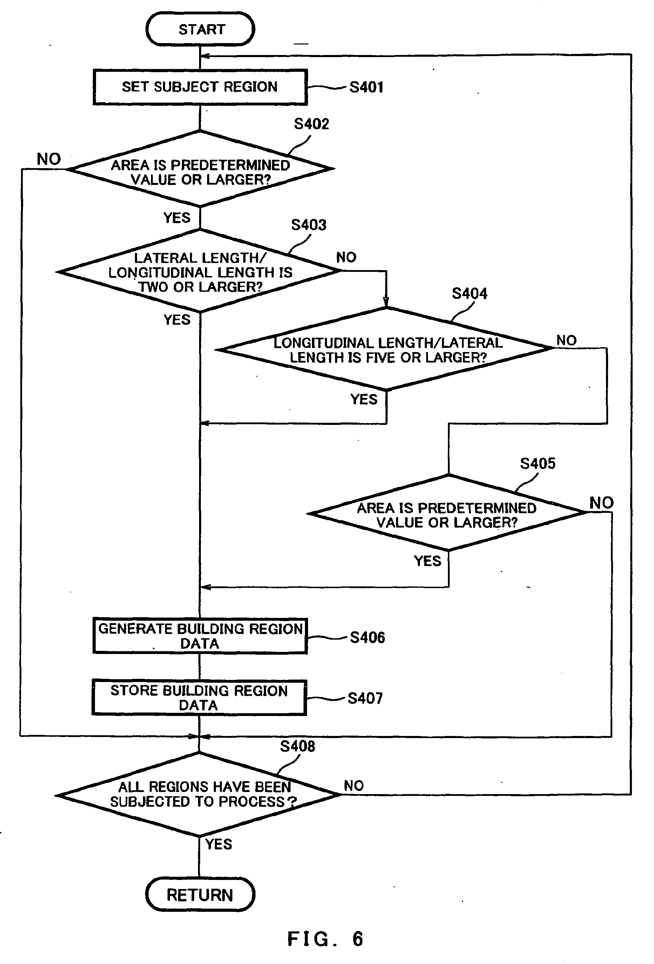

Fig. 6 is a flowchart showing a procedure of an operation of the driving assist system 1 of the present invention, which is associated with the building detection process.

First, the driving assist system 1 selects specified one from the labeled regions as the subject region to be subjected to the process (S401), and determines whether or not the area of the subject region is a predetermined value or larger (S402). If it is determined that the area of the subject region is smaller than the predetermined value (NO in S402), the driving assist system 1 advances the process to step S408 described later.

On the other hand, if it is determined that the area of the subject region is the predetermined value or larger (YES in S402), the driving assist system 1 recognizes a lateral length and a longitudinal length of the subject region and then determines whether or not a ratio of the lateral length to the longitudinal length is 2 or larger (S403). If it is determined that the ratio is smaller than 2 (NO in S403), then the driving assist system 1 determines whether or not a ratio of the longitudinal length to the lateral length is 5 or larger (S404). If it is determined that the ratio is smaller than 5(NO in step S404), the driving assist system 1 determines whether or not the area of the subject region is a predetermined value or larger (value larger than the predetermined value in step S402) (S405). If it is determined that the area is smaller than the predetermined value (NO in step S405), the driving assist system 1 advances the process to step S408 described later.

If it is determined that the ratio of the lateral length to the longitudinal length is 2 or larger in step S403 (YES in S403), it is determined that the ratio of the longitudinal length to the lateral length is 5 or larger in step S404 (YES in S404), or it is determined that the area is the predetermined value or larger in step S405 (YES in step S405), then the driving assist system 1 determines that the subject region is the region corresponding to the building (building region), and generates the building region data associated with the building region using data relating to position, area and others of the subject region (S406). Then, the driving assist system 1 stores the building region data in the RAM 13 (S407).

Then, the driving assist system 1 determines whether or not all the labeled regions have been set as the subject regions and have been subjected to the process (S408). If it is determined that there is a region which has not been set as the subject region and has not been subjected to the process (NO in S408), the driving assist system 1 returns the process to step S401 and executes the steps S401 through S407. On the other hand, if it is determined that all the regions have been set as the subject regions and have been subjected to the process (YES in S408), then the driving assist system 1 terminates the building detection process.

As should be appreciated from the above, when it is determined that the subject region has the area of the predetermined value and the predetermined shape, the driving assist system 1 determines that the subject region indicates a building. In this embodiment, when the subject region has a laterally elongated shape in which the ratio of the lateral length to the longitudinal length is 2 or larger or a longitudinally elongated shape in which the ratio of the longitudinal length to the lateral length is 5 or larger, or the area of the subject region is the predetermined value or larger, it is determined that the subject region indicates the building. These are merely exemplary, and other shapes may be the building, as a matter of course.

As shown in Fig. 2, after the building detection process, the driving assist system 1 executes a disturbance deletion process for deleting the region which has been determined to be the building region (S106). Then, the driving assist system 1 executes a first person detection process for detecting a first person who is present forward of the vehicle (S107). As used herein, the term "first person detection process" refers to a process for detecting a person by detecting a head part (including a face) of the person and other part of the person separately.

### [First Person Detection Process]

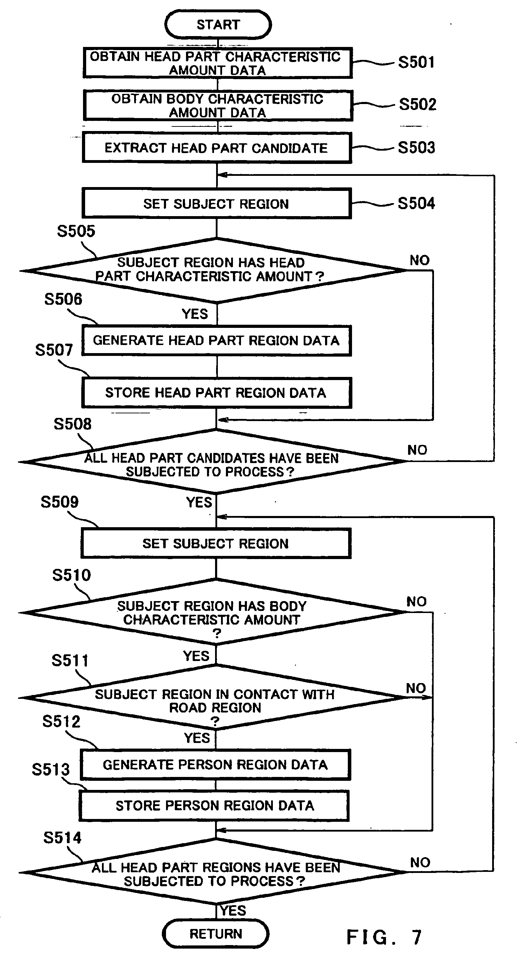

Fig. 7 is a flowchart showing a procedure of an operation of the driving assist system 1 of the present invention, which is associated with the first person detection process.

First, the driving assist system 1 obtains, from the ROM 12, head part characteristic amount data indicating a head part characteristic amount which is represented by a numeric value of the head part of the person (S501), and further, from the ROM 12, body characteristic amount data indicating a body characteristic amount which is represented by a numeric value of the body of the person (S502).

As used herein, the term "head part characteristic amount" means numeric data indicating a shape pattern of the head part of the person. Specific example of this is numeric data indicating an oval region which is longitudinally elongated. Also, the term "body characteristic amount" means numeric data indicating a shape pattern of parts other than the head part of the person. Specific example of this is numeric data indicating a rectangular region which is longitudinally elongated.

Then, the driving assist system 1 extracts a region (head part candidate) predicted to be the head part of the person from the labeled regions (S503). To be specific, the driving assist system 1 extracts as a head part candidate, the region having brightness (i.e., temperature) higher than those of the other regions and having an area which is smaller than a predetermined value.

Then, the driving assist system 1 sets a specified head part candidate as a subject region to be subjected to the process (S504). The driving assist system 1 determines whether or not the subject region has the head part characteristic amount indicated by the head part characteristic amount data obtained in step S501 (S505).

If it is determined that the subject region does not have the head part characteristic amount in step S505 (NO in S505), the driving assist system 1 advances the process to step S508 described later. On the other hand, if it is determined that the subject region has the head part characteristic amount in step S505 (YES in S505), the driving assist system 1 determines that the subject region is a region of the head part of the person (head part region), and generates head part region data relating to the head part of the person using data relating to position, area and others of the subject region (S506). The driving assist system 1 stores the head part region data in the RAM 13 (S507).

Then, the driving assist system 1 determines whether or not all the head part candidates have been set as the subject regions and have been subjected to the process (S508). If it is determined that there is a region which has not been set as the subject region and has not been subjected to the process (NO in S508), the driving assist system 1 returns the process to step S504 and executes the above described steps S504 through S507. On the other hand, if it is determined that all the head part candidates have been set as the subject regions and have been subjected to the process (YES in S508), the driving assist system 1 selects specified one from the head part regions indicated by the head part region data stored in the RAM 13, and sets the labeled region in contact with a lower part of that head part region as the subject region (S509).

Then, the driving assist system 1 determines whether or not the subject region has the body characteristic amount indicated by the body characteristic amount data which has been obtained in step S502 (S510). If it is determined that the subject region does not have the body characteristic amount (NO in S510), the driving assist system 1 advances the process to step S514.

On the other hand, if it is determined that the subject region has the body characteristic amount in step S510 (YES in S510), the driving assist system 1 determines that the subject region and the head part region in contact with an upper part of the subject region are person candidate, and further determines whether or not a lower part of the subject region is in contact with the road region indicated by the road region data stored in the RAM 13 (S511).

If it is determined that the lower part of the subject region is not in contact with the road region in step S511 (NO in S511), the driving assist system 1 advances the process to step S514 described later. On the other hand, if it is determined that the lower part of the subject region is in contact with the road region in step S511 (YES in S511), the driving assist system 1 determines that the subject region and the head part region in contact with the upper part of the subject region are a region (person region) corresponding to the person, and generates person region data relating to the person region using data relating to position, area and others of the subject region (S512). Then, the driving assist system 1 stores the person region data in the RAM 13 (S513).

Then, the driving assist system 1 determines whether or not the labeled regions positioned under all the head part regions have been set as the subject regions and have not been subjected to the process (S514). If it is determined that there is a region which has not been set as the subject region and has not been subjected to the process (NO in S514), the driving assist system 1 returns the process to step S509, and executes the above steps S509 through S513. On the other hand, if it is determined that all the labeled regions have been set as the subject regions (YES in S514), the driving assist system 1 terminates the first person detection process.

As in the embodiment, the far-infrared camera 21 which is an imaging device, is capable of taking an image in which high temperature regions are displayed by high brightness. In general, temperatures of surfaces of parts other than the head part of the person are lower because of clothes covering them, whereas the temperature of the surface of the head part is higher. So, in many cases, the head part can be detected more stably than the other parts. Therefore, by detecting the region corresponding to the head part of the person and subsequently detecting the region corresponding to the body of the person in contact with the lower part of that head part region, the person can be detected more stably.

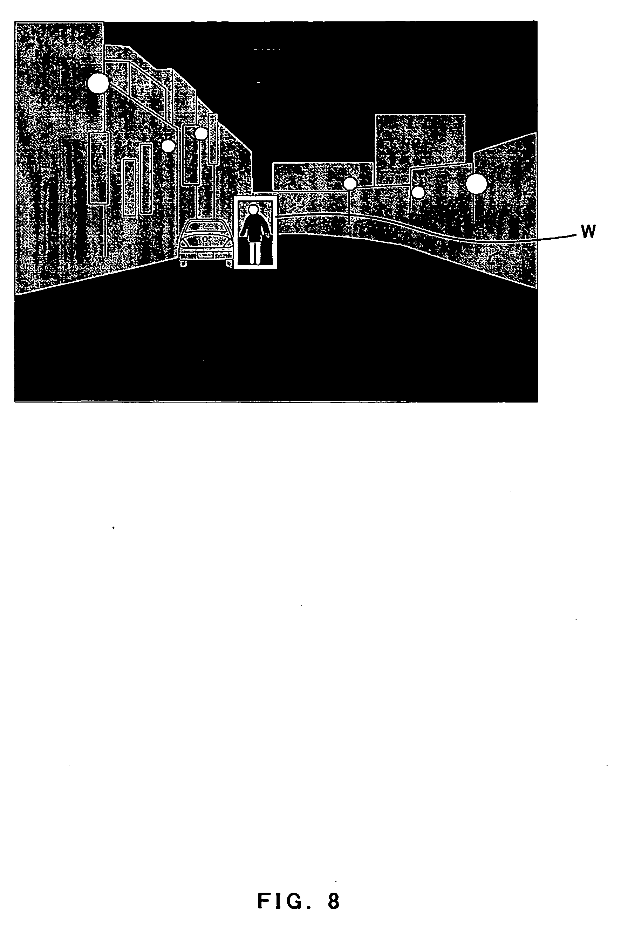

Fig. 8 is a conceptual view showing an example of the image used in the driving assist system 1 of the present invention. In Fig. 8, W indicates a person region detected by the driving assist system 1.

As shown in Fig. 8, the body part of the person covered with clothes has a lower surface temperature, and therefore is typically represented by brightness lower than that of its vicinity region, whereas the head part has a higher surface temperature and is therefore represented by brightness higher than that of its vicinity region. In this case, the driving assist system 1 first detects the head part which can be stably detected and then detects the body of the person in contact with the lower part of the head part, thus detecting the person region W. In this manner, the person can be detected more stably.

By determining whether or not the lower part of the subject region is in contact with the road in step S511, the person on whom attention must be focused by the driver of the two-wheeled vehicle can be detected more stably. Furthermore, in a situation where a person-like object is displayed on the image rather than the person itself, incorrect detection that the object is the person can be prevented by confirming a positional relationship between the shape of the object and the road.

Whereas in this embodiment, it is determined whether or not the subject region is in contact with the road in step S511, the step S511 may be omitted, and it may be determined that the subject region is the person region when the subject region has the head part characteristic amount and the body characteristic amount. In this case, the driving assist system 1 may omit the above road detection process.

As shown in Fig. 2, after the first person detection process, the driving assist system 1 executes a second person detection process (S108). As used herein, the term "second person detection process" refers to a process for detecting the person by detecting a whole body of the person as a unitary piece.

### [Second Person Detection Process]

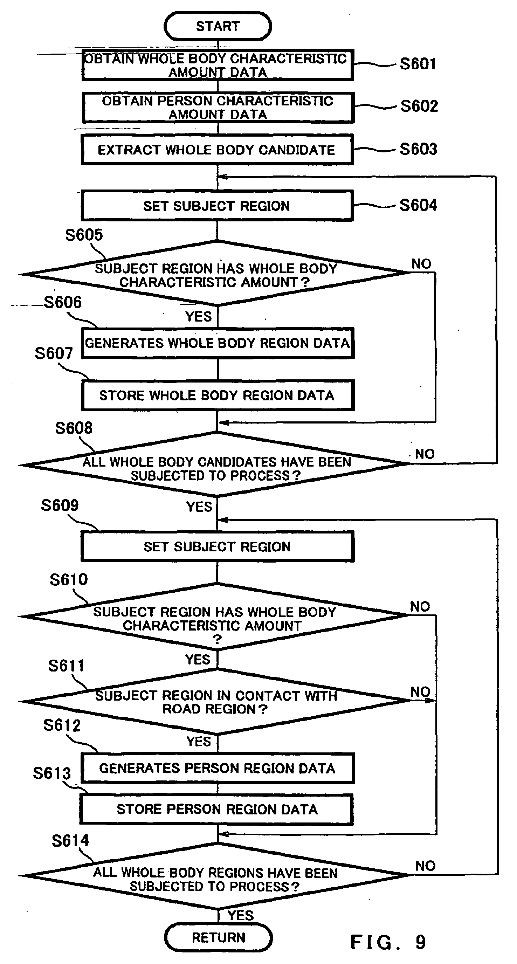

Fig. 9 is a flow chart showing a procedure of an operation of the driving assist system 1 of the present invention, which is associated with the second person detection process.

First, the driving assist system 1 obtains, from the ROM 12, whole body characteristic amount data indicating a whole body characteristic amount which is represented by a numeric value of a characteristic of the whole body of the person (S601), and further obtains person characteristic amount data indicating the person characteristic amount which is represented by a numeric value of a characteristic of a shape pattern of the person (S602).

As used herein, the term "whole body characteristic amount" means numeric data indicating a shape pattern of a whole body of the person, specifically, numeric data indicating a longitudinally elongated region in which the ratio of the longitudinal length to the lateral length is approximately 2:1 or 3:1. As used herein, the term "person characteristic amount" means numeric data indicating a shape pattern of the person. The driving assist system 1 determines whether or not the person candidate has the person characteristic amount as described below.

The driving assist system 1 extracts from the labeled regions, regions which have brightness higher than those of the other regions and have an area of a predetermined value as whole body candidates corresponding to the whole body of the person (S603). The driving assist system 1 selects specified one from the whole body candidates and sets it as a subject region to be subjected to the process (S604).

Then, the driving assist system 1 determines whether or not the subject region has the whole body characteristic amount indicated by the whole body characteristic amount data obtained in step S601 (S605).

If it is determined that the subject region does not have the whole body characteristic amount in step S605 (NO in step S605), the driving assist system 1 advances the process to step S608. On the other hand, if it is determined that the subject region has the whole body characteristic amount in step S605 (YES in step S605), the driving assist system 1 determines that the subject region is the region (whole body region) corresponding to the whole body of the person, and generates whole body region data relating to the whole body of the person using data relating to position, area, and others of the subject region (S606). Then, the driving assist system 1 stores the whole body region data in the RAM 13 (S607).

Then, the driving assist system 1 determines whether or not all the whole body candidates have been set as the subject regions and have been subjected to the process (S608). If it is determined that there is a region which has not been set as the subject region and has not been subjected to the process (NO in S608), the driving assist system 1 returns the process to step S604, and executes the steps S604 through S607. On the other hand, if it is determined that all the whole body candidates have been set as the subject regions and have not been subjected to the process (YES in S608), the driving assist system 1 selects specified one from the whole body regions indicated by the whole body region data stored in the RAM 13 and sets the specified one as the subject region (S609).

Then, the driving assist system 1 determines whether or not the subject region has the person characteristic amount indicated by the person characteristic amount data obtained in step S602 (S610). To be specific, the driving assist system 1 determines whether or not the subject region has the person characteristic amount by detecting whether or not the subject region corresponds to the shape pattern of the person based on shading of a plurality of regions into which the subject region is divided. If it is determined that the subject region does not have the person characteristic amount (NO in S610), the driving assist system 1 advances the process to step S614. On the other hand, if it is determined that the subject region has the person characteristic amount in step S608 (YES in S608), the driving assist system 1 determines that the subject region is the person candidate, and further determines whether or not the lower part of the subject region is in contact with the road region indicated by the road region data stored in the RAM 13 (S611).

If it is determined that the lower part of the subject region is not in contact with the road region (NO in S611), the driving assist system 1 advances the process to step S614. On the other hand, if it is determined that the lower part of the subject region is in contact with the road region (YES in S611), the driving assist system 1 determines that the subject region is the region corresponding to the person (person region), and generates person region data relating to the person using data relating position, area and others of the subject region (S612). The driving assist system 1 stores the person region data in the RAM 13 (S613).

Then, the driving assist system 1 determines whether or not all the whole body regions have been set as the subject regions and have been subjected to the process (S614). If it is determined that there is a region which has not been set as the subject region and has not been subjected to the process (NO in S614), the driving assist system 1 returns the process to step S609, and executes the above steps S609 through S613. On the other hand, if it is determined that all the whole body regions have been set as the subject regions and have been subjected to the process (YES in S614), the driving assist system 1 terminates the second person detection process.

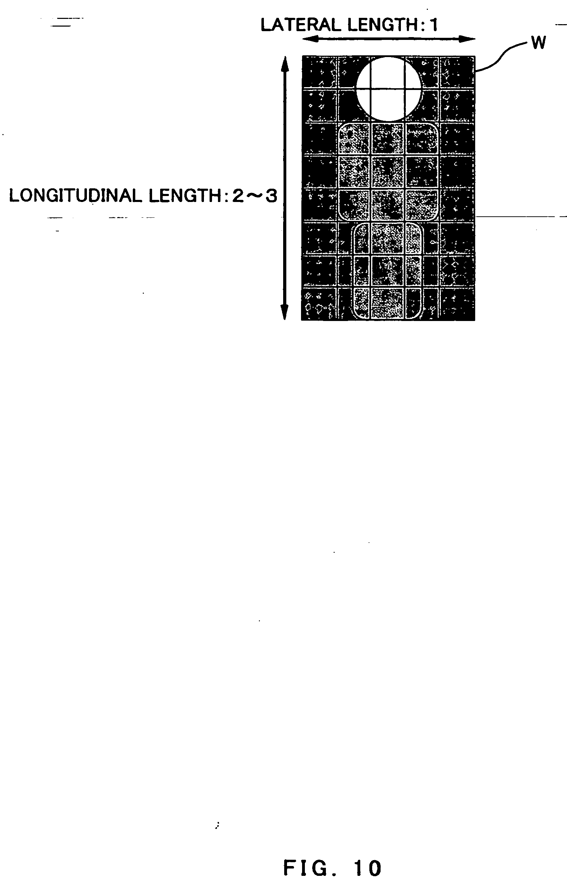

Fig. 10 is a view showing a concept of the person region detected by the second person detection process. As shown in Fig. 10, the specified region W is a longitudinally elongated region in which the ratio of the longitudinal length to the lateral length is 2 : 1 to 3 : 1. Based on this, the driving assist system 1 determines that the region W has the whole body characteristic amount in step S605.

As shown in Fig. 10, when the region W is divided into (5 × 8) blocks, shading of the divided regions corresponds to the shape pattern of the person. In this case, the driving assist system 1 determines that the region W has the person characteristic amount in step S610.

Through the above steps, the driving assist system 1 determines that the region W has the whole body characteristic amount and the person characteristic amount. In addition, when the lower part of the region W is in contact with the road region, the driving assist system 1 determines that the region W is the person region, and generates and stores the person region data.

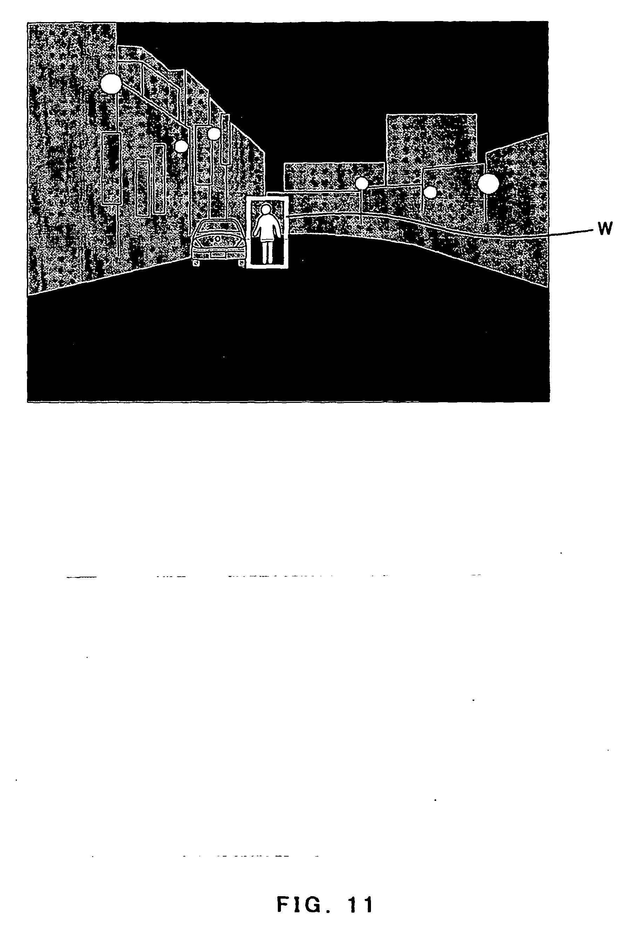

Fig. 11 is a conceptual view showing an example of an image used in the driving assist system 1 of the present invention. In Fig. 11, W indicates the person region detected by the driving assist system 1 of the present invention.

When the region showing the whole body of the person appears in the image as shown in Fig. 11, the driving assist system 1 determines that the region has the whole body characteristic amount and the person characteristic amount in the manner as described above. If it is determined that the lower part of the region is in contact with the road region, the driving assist system 1 detects the region as the person region W.

Whereas in this embodiment, it is determined whether or not the subject region is in contact with the road in step S611, step S611 may be omitted, and it may be determined that the subject region is the person region if the subject region has the whole body characteristic amount and person characteristic amount. In that case, the above road detection process may be omitted.

As shown in Fig. 2, after the second person detection process, the driving assist system 1 executes a detection result output process (S109). As used herein, the term "detection result output process" refers to a process for informing the driver of the two-wheeled vehicle of processing results of the first person detection process and the second person detection process.

### [Detection Result Output Process]

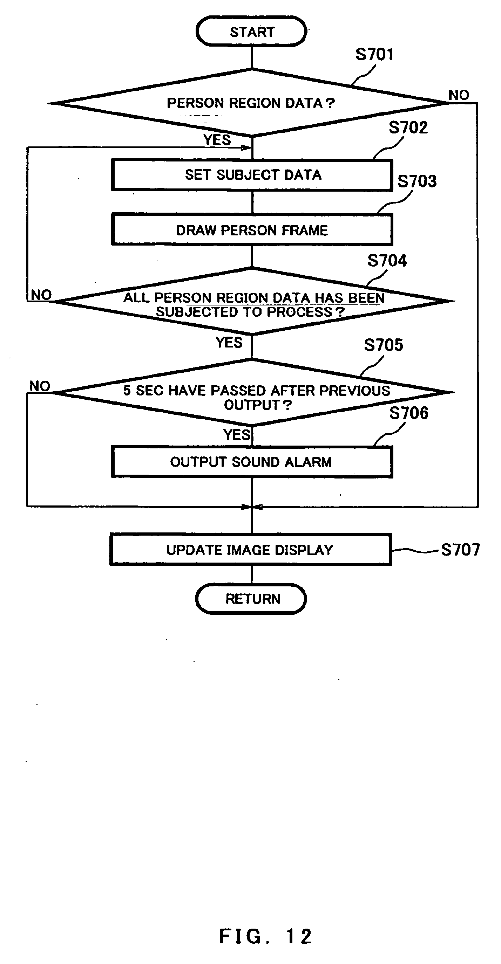

Fig. 12 is a flow chart showing a procedure of an operation of the driving assist system 1, which is associated with the detection result output process.

The driving assist system 1 determines whether or not the person region data is stored in the RAM 13 (S701). If it is determined that the person region data is not stored in the RAM 13 (NO in S701), the driving assist system 1 advances the process to step S707. On the other hand, if it is determined that the person region data is stored in the RAM 13 (YES in S701), the driving assist system 1 selects specified one from the stored person region data and sets the specified one as subject data to be subjected to the process (S702).

Then, the driving assist system 1 executes a drawing process of a person frame indicating the region of the person based on the person region data of the subject data (S703). The driving assist system 1 determines whether or not all the person region data has been set as the subject data and has been subjected to the process (S704). If it is determined that there is person region data which has not been set as the subject data (NO in S704), the driving assist system 1 returns the process to step S702, and executes the steps S702 and S703.

If it is determined that all the person region data have been set as the subject data and have been subjected to the process (YES in S704), the driving assist system 1 determines whether or not 5 seconds have passed after the person frame has been displayed last (S705). If it is determined that 5 seconds have not passed yet (NO in S705), the driving assist system 1 advances the process to step S707. On the other hand, if it is determined that 5 seconds have passed (YES in S705), the driving assist system 1 causes the alarm sound output device 23 to output an alarm sound (S706).

The driving assist system 1 causes the display device 22 to display the drawn person frame, thus updating a displayed image.

In the manner described above, the driving assist system 1 informs the driver of the two-wheeled vehicle that the person has been detected so that the driver can recognize the presence of the person.

As should be appreciated from the above, in the driving assist system 1 of the present invention, since stereo vision is not necessary unlike the conventional driving assist system, only one camera as an imaging device is necessary to take images. As a result, the driving assist system 1 can be mounted in the two-wheeled vehicle such as the motorcycle.

## Claims

1. A driving assist system (1) for a vehicle comprising:
an imaging device (21) configured to take an image of a region forward of the vehicle such that brightness in the image is higher in a subject region with a higher temperature, the image including a road;
a road region detector configured to detect (S104) a road region corresponding to the road from the image taken by the imaging device (21).
a person candidate detector configured to detect (S503, S603) a person candidate based on a result of comparison between a higher-brightness region in the image and a shape pattern prestore; **characterized in that** the driving assist system further comprises
a person determiner configured to determine (S511, S611) whether or not the detected person candidate is a person, based on a positional relationship between the road region detected by the road region detector and the person candidate detected by the person candidate detector.

2. The driving assist system according to claim 1, wherein the person determiner is configured to determine (S511, S611) that the detected person candidate is the person when a lower part of the detected person candidate is in contact with the detected road region.

3. The driving assist system according to claim 1 or 2, wherein the road region detector is configured to determine whether or not a specified region in the image is the road region based on a dimension of an area of the specified region and a position of the specified region.

4. The driving assist system according to claim 3, wherein the road region detector is configured to determine that the specified region is the road region when the area of the specified region is larger than a value set based on an area of the whole image and the specified region is located on a lower side.

5. The driving assist system according to claim 2, wherein
the imaging device (21) is a far-infrared camera; and
wherein the road region detector is configured to determine whether or not a specified region in the image is the road region, based on brightness change in the specified region in the image.

6. The driving assist system according to claim 5, wherein the road region detector is configured to determine that the specified region is the road region when the brightness change in the specified region is smaller than brightness change in the other regions in the image.

7. The driving assist system according to claim 1, wherein
the imaging device (21) is a far-infrared camera; and
wherein the person candidate detector is configured to compare a region whose brightness is higher than brightness of the other regions in the image to a shape pattern of a head part of the person, to determine whether or not the region whose brightness is higher is a head part region corresponding to a head part of the person candidate based on the comparison result, and to determine the region including the region whose brightness is higher as the person candidate when it is determined that the region whose brightness is higher is the head part region.

8. The driving assist system according to claim 7, wherein the person candidate detector is configured to compare a region located under the head part region to a shape pattern of a part other than the head part of the person, to determine whether or not the region located under the head part region is the region corresponding to the part other than the head part of the person candidate based on the comparison result, and to determine (S510) that a region including the head part region and the region located under the head part region is the person candidate when it is determined that the region located under the head part region is the region corresponding to the part other than the head part of the person candidate.

9. The driving assist system according to claim 1, wherein
the imaging device (21) is a far-infrared camera; and
wherein the person candidate detector is configured to determine (S605) that a region whose brightness is higher than brightness of the other regions in the image is the person candidate, based on a ratio of a longitudinal length to a lateral length of the region whose brightness is higher.

10. The driving assist system according to claim 9, wherein the person candidate detector is configured to compare the region whose brightness is higher to a shape pattern of a whole body of the person and to determine whether or not the region whose brightness is higher is the person candidate, based on the comparison result.

11. The driving assist system according to claim 1, further comprising:
an image compensator configured to compensate (S103) the image according to a vibration amount of the vehicle.

12. The driving assist system according to claim 11, wherein the imaging device is configured to take a plurality of images at specified time intervals; and
wherein the image compensator is configured to compare a precedent image taken by the imaging device (21) and an image which is taken by the imaging device (21) after the precedent image and to compensate the image after the precedent image based on the comparison result.

13. The driving assist system according to claim 1,
wherein the person candidate detector is configured to determine whether or not a region whose brightness is higher than brightness of the other regions in the image is a whole body region corresponding to a whole body of the person candidate, based on a ratio of a longitudinal length to a lateral length of the region whose brightness is higher; and
wherein the person candidate detector is configured to compare the region whose brightness is higher which has been determined as the whole body region to a shape pattern of the whole body of the person and to determine (S605) whether or not the region whose brightness is higher is the person candidate, based on the comparison result.

14. The driving assist system according to claim 13, wherein the shape pattern has a shading pattern of the image.

15. The driving assist system according to claim 1,
wherein the person candidate detector is configured to compare a region whose brightness is higher than brightness of the other regions in the image to a shape pattern of a head part of the person, to determine (S505) whether or not the region whose brightness is higher is a head part region corresponding to the head part of the person candidate based on the comparison result, and
wherein the person candidate detector is configured to compare a region located under the region whose brightness is higher which has been determined as the head part region to a shape pattern of a part other than the head part of the person, to determine (S510) whether or not the region located under the region whose brightness is higher is the region corresponding to the part other than the head part of the person candidate based on the comparison result, and to determine a region including the region whose brightness is higher and the region located under the region whose brightness is higher is the person candidate when it is determined that the region located under the region whose brightness is higher is the region corresponding to the part other than the head part of the person candidate.

16. The driving assist system according to claim 1, further comprising:
a building region detector configured to detect (S105) a building region corresponding to a building, from the image taken by the imaging device; and
a disturbance deletion unit configured to delete (S106) the building region detected by the building region detector from the image taken by the imaging device;
wherein the person candidate detector is configured to detect the person candidate from the image from which the building region has been deleted by the disturbance deletion unit.

## Patentansprüche

1. Fahrunterstützungssystem (1) für ein Fahrzeug, umfassend:
eine Abbildungsvorrichtung (21), die ausgebildet ist zum Aufnehmen eines Bildes von einer Region vor dem Fahrzeug so, dass Helligkeit im Bild größer ist in einer Objektregion mit einer höheren Temperatur, wobei das Bild eine Straße einschließt;
einen Straßenregiondetektor, der ausgebildet ist zum Erfassen (S104) einer Straßenregion, die der Straße entspricht, aus dem von der Abbildungsvorrichtung (21) aufgenommenen Bild;
einen Personenkandidatendetektor, der ausgebildet ist zum Erfassen (S503, S603) eines Personenkandidaten auf Grundlage eines Ergebnisses eines Vergleichs zwischen einer Region größerer Helligkeit im Bild und einem vorab gespeicherten Formmuster; **dadurch gekennzeichnet, dass** das Fahrunterstützungssystem weiterhin umfasst
eine Personenbestimmungsvorrichtung, die ausgebildet ist zum Bestimmen (S511, S611), ob oder nicht der erfasste Personenkandidat eine Person ist, auf Grundlage eines positionellen Verhältnisses zwischen der vom Straßenregiondetektor erfassten Straßenregion und dem vom Personenkandidatendetektor erfassten Personenkandidaten.

2. Fahrunterstützungssystem nach Anspruch 1, wobei die Personenbestimmungsvorrichtung ausgebildet ist zum Bestimmen (S511, S611), dass der erfasste Personenkandidat die Person ist, wenn sich ein unterer Teil des erfassten Personenkandidaten in Kontakt mit der erfassten Straßenregion befindet.

3. Fahrunterstützungssystem nach Anspruch 1 oder 2, wobei der Straßenregiondetektor ausgebildet ist zum Bestimmen, ob oder nicht eine spezifizierte Region im Bild die Straßenregion ist, auf Grundlage einer Dimension eines Bereichs der spezifizierten Region und einer Position der spezifizierten Region.

4. Fahrunterstützungssystem nach Anspruch 3, wobei der Straßenregiondetektor ausgebildet ist zum Bestimmen, dass die spezifizierte Region die Straßenregion ist, wenn der Bereich der spezifizierten Region größer ist als ein Wert, der auf Grundlage eines Bereichs des gesamten Bildes festgelegt ist, und sich die spezifizierte Region auf einer unteren Seite befindet.

5. Fahrunterstützungssystem nach Anspruch 2, wobei
die Abbildungsvorrichtung (21) eine Feminfrarotkamera ist; und
wobei der Straßenregiondetektor ausgebildet ist zum Bestimmen, ob oder nicht eine spezifizierte Region im Bild die Straßenregion ist, auf Grundlage von Helligkeitsveränderung in der spezifizierten Region im Bild.

6. Fahrunterstützungssystem nach Anspruch 5, wobei der Straßenregiondetektor ausgebildet ist zum Bestimmen, dass die spezifizierte Region die Straßenregion ist, wenn die Helligkeitsveränderung in der spezifizierten Region geringer ist als Helligkeitsveränderung in den anderen Regionen im Bild.

7. Fahrunterstützungssystem nach Anspruch 1, wobei
die Abbildungsvorrichtung (21) eine Ferninfrarotkamera ist; und
wobei der Personenkandidatendetektor ausgebildet ist zum Vergleichen einer Region, deren Helligkeit größer ist als Helligkeit der anderen Regionen im Bild, mit einem Formmuster eines Kopfteils der Person, zum Bestimmen, ob oder nicht die Region, deren Helligkeit größer ist, eine einem Kopfteil des Personenkandidaten entsprechende Kopfteilregion ist, auf Grundlage des Vergleichsergebnisses, und zum Bestimmen der Region, die die Region einschließt, deren Helligkeit größer ist, als des Personenkandidaten, wenn bestimmt wird, dass die Region, deren Helligkeit größer ist, die Kopfteilregion ist.

8. Fahrunterstützungssystem nach Anspruch 7, wobei der Personenkandidatendetektor ausgebildet ist zum Vergleichen einer Region, die sich unter der Kopfteilregion befindet, mit einem Formmuster eines anderen Teils als des Kopfteils der Person, zum Bestimmen, ob oder nicht die Region, die sich unter der Kopfteilregion befindet, die Region ist, die dem anderen Teil als dem Kopfteil des Personenkandidaten entspricht, auf Grundlage des Vergleichsergebnisses, und zum Bestimmen (S510), dass eine Region, die die Kopfteilregion und die unter der Kopfteilregion befindliche Region einschließt, der Personenkandidat ist, wenn bestimmt wird, dass die Region, die sich unter der Kopfteilregion befindet, die Region ist, die dem anderen Teil als dem Kopfteil des Personenkandidaten entspricht.

9. Fahrunterstützungssystem nach Anspruch 1, wobei
die Abbildungsvorrichtung (21) eine Feminfrarotkamera ist; und
wobei der Personenkandidatendetektor ausgebildet ist zum Bestimmen (S605), dass eine Region, deren Helligkeit größer ist als Helligkeit der anderen Regionen im Bild, der Personenkandidat ist, auf Grundlage eines Verhältnisses von einer Länge in Längsrichtung zu einer Querlänge der Region, deren Helligkeit größer ist.

10. Fahrunterstützungssystem nach Anspruch 9, wobei der Personenkandidatendetektor ausgebildet ist zum Vergleichen der Region, deren Helligkeit größer ist, mit einem Formmuster eines ganzen Körpers der Person, und zum Bestimmen, ob oder nicht die Region, deren Helligkeit größer ist, der Personenkandidat ist, auf Grundlage des Vergleichsergebnisses.

11. Fahrunterstützungssystem nach Anspruch 1, das weiterhin umfasst:
einen Bildkompensator, der ausgebildet ist zum Kompensieren (S103) des Bildes in Übereinstimmung mit einem Vibrationsbetrag des Fahrzeugs.

12. Fahrunterstützungssystem nach Anspruch 11, wobei die Abbildungsvorrichtung ausgebildet ist zum Aufnehmen einer Mehrzahl von Bildern in spezifizierten Zeitintervallen; und
wobei der Bildkompensator ausgebildet ist zum Vergleichen eines von der Abbildungsvorrichtung (21) aufgenommenen vorhergehenden Bildes und eines Bildes, das von der Abbildungsvorrichtung (21) nach dem vorhergehenden Bild aufgenommen wird, und zum Kompensieren des Bildes nach dem vorhergehenden Bild auf Grundlage des Vergleichsergebnisses.

13. Fahrunterstützungssystem nach Anspruch 1,
wobei der Personenkandidatendetektor ausgebildet ist zum Bestimmen, ob oder nicht eine Region, deren Helligkeit größer ist als Helligkeit der anderen Regionen im Bild, eine einem ganzen Körper des Personenkandidaten entsprechende Ganz-Körper-Region ist, auf Grundlage eines Verhältnisses von einer Länge in Längsrichtung zu einer Querlänge der Region, deren Helligkeit größer ist; und
wobei der Personenkandidatendetektor ausgebildet ist zum Vergleichen der Region, deren Helligkeit größer ist, die als die Ganz-Körper-Region bestimmt worden ist, mit einem Formmuster des ganzen Körpers der Person und zum Bestimmen (S605), ob oder nicht die Region, deren Helligkeit größer ist, der Personenkandidat ist, auf Grundlage des Vergleichsergebnisses.

14. Fahrunterstützungssystem nach Anspruch 13, wobei das Formmuster ein Schattierungsmuster des Bildes aufweist.

15. Fahrunterstützungssystem nach Anspruch 1,
wobei der Personenkandidatendetektor ausgebildet ist zum Vergleichen einer Region, deren Helligkeit größer ist als Helligkeit der anderen Regionen im Bild, mit einem Formmuster eines Kopfteils der Person, zwecks Bestimmung (S505), ob oder nicht die Region, deren Helligkeit größer ist, eine dem Kopfteil des Personenkandidaten entsprechende Kopfteilregion ist, auf Grundlage des Vergleichsergebnisses, und
wobei der Personenkandidatendetektor ausgebildet ist zum Vergleichen einer Region, die sich unter der Region befindet, deren Helligkeit größer ist, die als die Kopfteilregion bestimmt worden ist, mit einem Formmuster eines anderen Teils als des Kopfteils der Person, zum Bestimmen (S510), ob oder nicht die Region, die sich unter der Region befindet, deren Helligkeit größer ist, die Region ist, die dem anderen Teil als dem Kopfteil des Personenkandidaten entspricht, auf Grundlage des Vergleichsergebnisses, und zum Bestimmen, dass eine Region, einschließlich der Region, deren Helligkeit größer ist, und der Region, die sich unter der Region befindet, deren Helligkeit größer ist, der Personenkandidat ist, wenn bestimmt wird, dass die Region, die sich unter der Region befindet, deren Helligkeit größer ist, die Region ist, die dem anderen Teil als dem Kopfteil des Personenkandidaten entspricht.

16. Fahrunterstützungssystem nach Anspruch 1, das weiterhin umfasst:
einen Gebäuderegiondetektor, der ausgebildet ist zum Erfassen (S105) einer Gebäuderegion, die einem Gebäude entspricht, aus dem von der Abbildungsvorrichtung aufgenommenen Bild; und
eine Störungslöscheinheit, die ausgebildet ist zum Löschen (S106) der vom Gebäuderegiondetektor erfassten Gebäuderegion aus dem von der Abbildungsvorrichtung aufgenommenen Bild;
wobei der Personenkandidatendetektor ausgebildet ist zum Erfassen des Personenkandidaten aus dem Bild, aus dem die Gebäuderegion von der Störungslöscheinheit gelöscht worden ist.

## Revendications

1. Système d'assistance à la conduite (1) pour véhicule comprenant :
un dispositif d'imagerie (21) configuré pour prendre une image d'une zone devant le véhicule de manière que la luminosité de l'image soit supérieure dans une zone-sujet présentant une température plus élevée, l'image incluant une route ;
un détecteur de zone de route configuré pour détecter (S 104) une zone de route correspondant à la route de l'image prise par le dispositif d'imagerie (21) ;
un détecteur de candidat-personne configuré pour détecter (S503, S603) un candidat-personne en se fondant sur un résultat de la comparaison entre une zone de luminosité supérieure sur l'image et un motif de forme pré-enregistré ; **caractérisé en ce que** le système d'assistance à la conduite comprend en outre :
un déterminateur de personne configuré pour déterminer (S511, S611) si le candidat-personne détecté est une personne ou non, en se fondant sur une relation de position entre la zone de route détectée par le détecteur de zone de route et le candidat-personne détecté par le détecteur de candidat-personne.

2. Système d'assistance à la conduite selon la revendication 1, dans lequel le déterminateur de personne est configuré pour déterminer (S511, S611) que le candidat-personne détecté est la personne lorsqu'une partie inférieure du candidat-personne détecté est en contact avec la zone de route détectée.

3. Système d'assistance à la conduite selon la revendication 1 ou 2, dans lequel le détecteur de zone de route est configuré pour déterminer si une zone spécifiée sur l'image est ou non la zone de route en se fondant sur une dimension d'une aire de la zone spécifiée et une position de la zone spécifiée.

4. Système d'assistance à la conduite selon la revendication 3, dans lequel le détecteur de zone de route est configuré pour déterminer que la zone spécifiée est la zone de route lorsque l'aire de la zone spécifiée est plus grande qu'une valeur établie en se fondant sur une aire de la totalité de l'image et que la zone spécifiée est située sur un côté inférieur.

5. Système d'assistance à la conduite selon la revendication 2, dans lequel le dispositif d'imagerie (21) est une caméra infrarouge lointain ; et
dans lequel le détecteur de zone de route est configuré pour déterminer si une zone spécifiée sur l'image est ou non la zone de route, en se fondant sur le changement de luminosité dans la zone spécifiée sur l'image.

6. Système d'assistance à la conduite selon la revendication 5, dans lequel le détecteur de zone de route est configuré pour déterminer que la zone spécifiée est la zone de route lorsque le changement de luminosité dans la zone spécifiée est inférieur au changement de luminosité dans les autres zones sur l'image.

7. Système d'assistance à la conduite selon la revendication 1, dans lequel le dispositif d'imagerie (21) est une caméra infrarouge lointain ; et
dans lequel le détecteur de candidat-personne est configuré pour comparer une zone, dont la luminosité est supérieure à la luminosité des autres zones sur l'image, à un motif de forme d'une partie de tête de la personne, pour déterminer si la zone dont la luminosité est supérieure est ou non une zone de partie de tête correspondant à une partie de tête du candidat-personne en se fondant sur le résultat de comparaison, et pour déterminer que la zone comportant la zone dont la luminosité est supérieure est le candidat-personne lorsqu'il a été déterminé que la zone dont la luminosité est supérieure est la zone de partie de tête.

8. Système d'assistance à la conduite selon la revendication 7, dans lequel le détecteur de candidat-personne est configuré pour comparer une zone située sous la zone de partie de tête à un motif de forme d'une partie différant de la partie de tête de la personne, pour déterminer si la zone située sous la zone de partie de tête est ou non la zone correspondant à la partie différant de la partie de tête du candidat-personne en se fondant sur le résultat de comparaison, et pour déterminer (S510) qu'une zone comprenant la zone de partie de tête et la zone située sous la zone de partie de tête est le candidat-personne lorsqu'il a été déterminé que la zone située sous la zone de partie de tête est la zone correspondant à la partie différant de la partie de tête du candidat-personne.

9. Système d'assistance à la conduite selon la revendication 1, dans lequel le dispositif d'imagerie (21) est une caméra infrarouge lointain ; et
dans lequel le détecteur de candidat-personne est configuré pour déterminer (S605) qu'une zone dont la luminosité est supérieure à la luminosité des autres zones sur l'image est le candidat-personne, en se fondant sur un rapport entre une dimension longitudinale et une dimension latérale de la zone dont la luminosité est supérieure.

10. Système d'assistance à la conduite selon la revendication 9, dans lequel le détecteur de candidat-personne est configuré pour comparer la zone dont la luminosité est supérieure à un motif de forme de la totalité du corps de la personne et pour déterminer si la zone dont la luminosité est supérieure est ou non le candidat-personne, en se fondant sur le résultat de comparaison.

11. Système d'assistance à la conduite selon la revendication 1, comprenant en outre :
un compensateur d'image configuré pour compenser (S103) l'image conformément à une quantité de vibration du véhicule.

12. Système d'assistance à la conduite selon la revendication 11, dans lequel le dispositif d'imagerie est configuré pour prendre une pluralité d'images à des intervalles de temps spécifiques ; et
dans lequel le compensateur d'image est configuré pour comparer une image précédente prise par le dispositif d'imagerie (21) et une image prise par le dispositif d'imagerie (21) après l'image précédente et pour compenser l'image faisant suite à l'image précédente en se fondant sur le résultat de comparaison.

13. Système d'assistance à la conduite selon la revendication 1,
dans lequel le détecteur de personne est configuré pour déterminer si une zone dont la luminosité est supérieure à la luminosité des autres zones sur l'image est ou non une zone d'intégralité de corps correspondant à l'intégralité du corps du candidat-personne, en se fondant sur un rapport entre une dimension longitudinale et une dimension latérale de la zone dont la luminosité est supérieure ; et
dans lequel le détecteur de personne est configuré pour comparer la zone dont la luminosité est supérieure, qui a été déterminée comme étant la zone d'intégralité du corps, à un motif de forme de l'intégralité du corps de la personne et pour déterminer (S605) si la zone dont la luminosité est supérieure est ou non le candidat-personne, en se fondant sur le résultat de comparaison.

14. Système d'assistance à la conduite selon la revendication 13, dans lequel le motif de forme a un motif d'ombrage de l'image.

15. Système d'assistance à la conduite selon la revendication 1,
dans lequel le détecteur de candidat-personne est configuré pour comparer une zone, dont la luminosité est supérieure à la luminosité des autres zones sur l'image, à un motif de forme d'une partie de tête de la personne, pour déterminer (S505) si la zone dont la luminosité est supérieure est ou non une zone de partie de tête correspondant à une partie de tête du candidat-personne en se fondant sur le résultat de comparaison, et
dans lequel le détecteur de candidat-personne est configuré pour comparer une zone située sous la zone dont la luminosité est supérieure, qui a été déterminée comme étant la zone de partie de tête, à un motif de forme d'une partie différant de la partie de tête de la personne, pour déterminer (S510) si la zone située sous la zone dont la luminosité est supérieure est ou non la zone correspondant à la partie différant de la partie de tête du candidat-personne en se fondant sur le résultat de comparaison, et pour déterminer qu'une zone comportant la zone dont la luminosité est supérieure et la zone située sous la zone dont la luminosité est supérieure est le candidat-personne lorsqu'il a été déterminé que la zone située sous la zone dont la luminosité est supérieure est la zone correspondant à la partie différant de la partie de tête du candidat-personne.

16. Système d'assistance à la conduite selon la revendication 1, comprenant en outre :
un détecteur de zone bâtie configuré pour détecter (S 105) une zone bâtie, correspondant à un bâtiment, à partir de l'image prise par le dispositif d'imagerie ; et
une unité d'effacement de perturbation configurée pour effacer (S106) la zone bâtie détectée par le détecteur de zone bâtie à partir de l'image prise par le dispositif d'imagerie ;
dans lequel le détecteur de candidat-personne est configuré pour détecter le candidat-personne à partir de l'image de laquelle la zone bâtie a été effacée par l'unité d'effacement de perturbation.
